# EUROPEAN PATENT SPECIFICATION

(11) **EP 2 129 095 B1**
(45) Date of publication and mention of the grant of the patent: **11.07.2012**
(21) Application number: 08009899.9
(22) Date of filing: 30.05.2008
(51) Int. Cl.: H04Q 3/00, H04M 11/00, H04W 4/00

(54) **M2M communication using a plurality of SIM-less communication modules**
M2M-Kommunikation unter Verwendung mehrerer SIM-loser Kommunikationsmodule
Communication de type M2M utilisant plusieurs modules de communication sans SIM

(43) Date of publication of application: 02.12.2009
(73) Proprietor: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Busropan, Bryan Jerrel, 2268 BP Leidschendam (NL); Van Loon, Johannes Maria, 2719 JE Zoetemeer (NL)
(74) Representative: Wuyts, Koenraad Maria

(56) References cited:
- WO-A-2007/069974
- WO-A-2008/088414
- DE-A1- 19 922 667

## Description

### FIELD OF THE INVENTION

Generally, the invention relates to the field of data transfer over a wireless circuit switched telecommunications network. More specifically, the invention relates to a method for transferring data from a plurality of SIM-less communication modules to a data processing centre over a wireless circuit switched telecommunications network.

### BACKGROUND OF THE INVENTION

The past decades have shown an ever increasing demand for data capacity of telecommunications networks. Telecommunications providers have adapted their networks to provide extended services to meet the demands of their clients.

One example of such services relates to the field of machine-to-machine (M2M) communications. M2M applications typically involve hundreds or thousands of communication modules that only rarely require access to a telecommunications network. An example involves the electronic reading of e.g. electricity meters at the homes of a large customer base. Other examples include sensors, meters, coffee machines etc. that can be equipped with communication modules that allow for reporting status information to a data processing centre over the telecommunications network. The data processing centre may e.g. store the data and/or provide a schedule for maintenance people to repair a machine, meter, sensor etc.

Although M2M communications hold efficiency promises, the costs of the communication modules and the connection with the data processing centres should be decreased before large scale implementation will be economically viable.

One approach to decrease M2M communication costs is to avoid subscriber identity module (SIM) cards in the communication modules. The operator of the telecommunications network saves the costs of the SIM cards and, furthermore, does no longer need to assign telephone numbers to such communication modules or to reserve capacity in the home location register (HLR) of the telecommunications network.

US2004/023689 discloses a method for arranging a SIM facility to digital wireless terminal equipment without a physical SIM card. The SIM facility may be downloaded into the terminal equipment through a data communication network. When the user has connected the power to his terminal, a starting functionality arranged therein will detect that there is no SIM facility and will, subsequently activate a SIM downloading application. The downloading application asks the user for an identifier of the subscriber connection. The user provides the identifier from the terminal equipment's keyboard, and based on the identifier, the terminal equipment will form the user's identifier information using equipment information, besides the identifier given by the user. The identifier information is transmitted through the data communication network to a management functionality, which receives it and finds that the subscriber in question has the right to download the SIM facility in his terminal equipment. If the subscriber does not have the right to download the SIM facility in the network, the terminal equipment is blocked and its SIM downloading application makes a similar attempt in the following network found.

At the same time, the user interface of the terminal equipment is delayed by showing a "SIM loading" message. A data communication connection is formed between the terminal equipment and the management functionality and data transmission is carried out to download SIM data to the terminal equipment. The terminal equipment receives the SIM data and stores it in its memory devices. When all has been downloaded at terminal equipment, the SIM application is activated in the terminal equipment. When the terminal equipment's SIM downloading application has made sure that all the SIM data to be downloaded has been successfully downloaded and stored in the terminal equipment, the terminal equipment is updated. Then, the terminal equipment's user interface is freed and the user is permitted to perform the ordinary steps such as user and terminal equipment authentication steps in the data communication network.

Although the terminal equipment of the prior art initially does not have a SIM card installed, it is clear that the disadvantages for M2M applications are not resolved by the prior art method since telephone numbers should still be assigned to the different terminals and HLR capacity should be reserved to allow such terminals to obtain full mobile phone functionality.

Document WO 2007/069974 discloses a telematic system wherein a mobile terminal is locked to a telematic application, but still using a SIM card.

### SUMMARY OF THE INVENTION

It is an object of the present invention, as defined in the claims, to make the concept of SIM-less communication units available for cost effective M2M communications.

A method of transferring data from at least a first communication module and a second communication module to, respectively, a first data processing centre and a second data processing centre is proposed. The data is transferred via a circuit switched telecommunications network. A first connection request containing a first pre-provisioned telephone number from the first communication module and a second connection request containing a second pre-provisioned telephone number from the second communication module is received in the network, e.g. in the mobile switching centre (MSC). The first and second telephone number are processed in the network such that the network refrains from authenticating the first and second communication module in order to connect to the telecommunications network. Subsequently a first and a second circuit switched data connection are established with the first and second communication modules for receiving the data in response to the first and second connection request, respectively. The data can be routed from the first communication module to the first data processing centre and from the second communication module to the second data processing centre in accordance with the first and second telephone number respectively.

The applicant also proposes a telecommunications network for performing such a method, a communication module for operating in such a method, and the use of such a communications module in such a method or telecommunications network.

The proposal of the applicant has been inspired by the emergency call functionality that has been standardized for mobile phones. Telecommunication network operators make available particular (often short) telephone numbers that may be called to alarm emergency services without requiring the mobile phone to contain or have access to a SIM card. The mobile phone chooses the telecommunications network for which the strongest signal is received. The mobile phone is allowed to access this telecommunications network without authentication. An example of this approach is provided in WO 2003/037026.

By not requiring SIM cards for the communication modules in M2M applications, no numbers need to be assigned for the communication modules and no HLR capacity needs to be reserved, resulting in a considerable cost decrease. A mandatory telecommunications network is assigned in the communication module for the transfer of data. The telephone number is also indicative of the routing of the data to a respective data processing centre. Also in contrast with the emergency call functionality, the assigned telephone number for the data processing centre may be a long number, e.g. selected from a range of MSISDN numbers, since the telephone number is not required to be easily remembered.

An alternative of the above method is defined in claim 10, wherein a single telephone number is used for routing the data to a data processing centre and the identifiers, such as the IMEI's of the communication modules indicate the required processing of the data. The alternative embodiment may e.g. be used in situations wherein it is not appropriate to assign a specific telephone number for a specfic set of communication modules

The embodiment of claim 2 provides the advantage of assigning internal network addresses and thus provides increased flexibility.

The embodiment of claim 3 provides the advantage that the communication module attaches to a predefined network that is configured to appropriately transfer the data to the data processing centre. The predefined network is indicated by means of the mobile network code (MNC).

The embodiment of claim 4 provides the advantage that the communication modules do not need to be connected to the network continuously, thereby saving network resources. For M2M applications, communication modules typically only rarely have data to be transmitted.

The embodiments of claims 5 and 6 allow for further distinguishing data from different communication modules. The IMEI of claim 5 may be used to distinguish on the basis of the communication module from which the data is obtained, an example being provided in claim 7. The application code of claim 6 enables to distinguish data on the type of application from which the data is obtained, the latter being suitable e.g. for communication modules reporting data from several different sensors.

The embodiment of claim 8 provides the advantage that the subscriber, typically the organization that requires the data processing, may be billed for the access to the telecommunications network, the data transfer and/or the data processing in the absence of SIM card data from the communication modules.

The embodiment of claim 9 provides the advantage that existing telecommunication networks can be employed for M2M communication applications.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 shows a schematic illustration of a system for transmitting data in a machine-to-machine communication system according to an embodiment of the invention;
FIG. 2 shows a schematic illustration of a communication module according to an embodiment of the invention; and
FIG. 3 shows a schematic illustration of a network server for use in the system of FIG. 1.

### DETAILED DESCRIPTION OF THE DRAWINGS

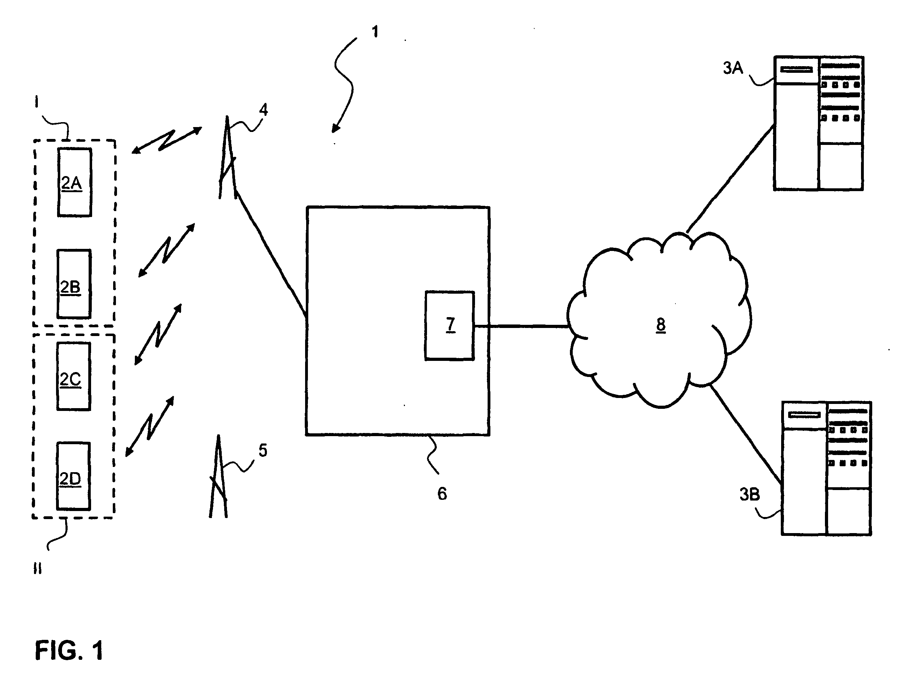

FIG. 1 shows a schematic illustration of a machine-to-machine (M2M) system 1 comprising a plurality of communication modules 2A-2D. Communication modules 2A, 2B are exploited by a first organization I and may be used, e.g. for communicating electricity usage data of electricity meters to a data processing centre 3A to generate a annual electricity bill. Communication modules 2C, 2D are exploited by a second organization II and may be used to monitor installations, such as coffee machines or printer, for operation and report the status to a second data processing centre 3B for servicing and maintenance purposes.

Base stations 4, 5 are installed in the area of communication 2A-2D and provide coverage for these modules. Base station 4 is part of a circuit switched telecommunications network 6. Base station 5 may be part of another telecommunications network (not further shown). Telecommunications network 6 identifies itself by broadcasting its mobile network code (MNC) in combination with a mobile country code (MCC). Telecommunications network 6 may be a GSM, UMTS or other circuit switched wireless access network.

Telecommunications network 6 comprises a mobile switching centre (MSC) 7 in a manner known as such. In the embodiment of FIG. 1, MSC 7 provides access to a further network 8 or collection of networks, such as the internet, for transferring data from the communication modules 2A-2D via the telecommunications network 6 and the further network 8 to data processing centres 3A, 3B. It should be appreciated that telecommunications network 6 and further network 8 may be the same network.

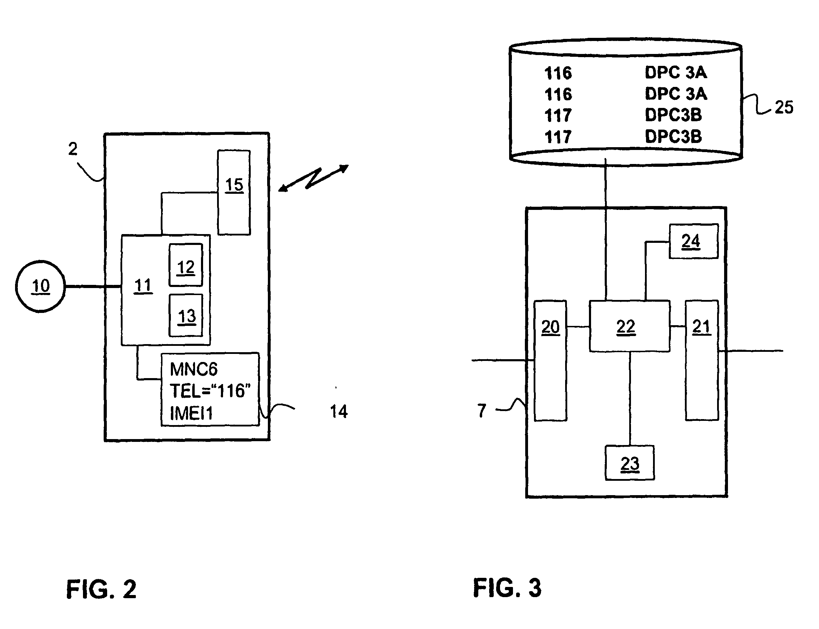

FIGS. 2 and 3 provide schematic illustrations of a communication module 2 and a MSC 7, respectively.

Communication module 2 comprises or is communicatively connected to a sensor 10. A communication module 2 may comprise or communicatively connected to a plurality of, possibly functionally different, sensors. Sensor 10 monitors operation and/or receives data of a device or other instance, such as a room. Communication module 2 has a processing unit 11 comprising a timer module 12 and/or an incident detector 13. Furthermore, communication module 2 has a non-detachable memory unit 14 comprising a single mobile network code MNC6 of telecommunications network 6 and a number, e.g. 116, for connecting to the telecommunications network 6. Furthermore, the memory unit comprises the international mobile equipment identifier (IMEI), e.g. IMEI1 of the communication module 2A. An application identifier may also be present. Communication module 2 also comprises a transmitter 15 for wirelessly accessing the wireless part of telecommunications network 6.

Communication device 2 does not possess a telephone number (MSISDN) for receiving telephone calls or messages or an International Mobile Subscriber Identity (IMSI) to attach to the telecommunication network. The communication device 2 is configured such that it does not require a traditional subscriber identity module (SIM). The information stored in the non-detachable memory module 14 is sufficient for the communication module 2 to perform its function as an M2M communication module. Customers, such as organizations I, II may easily change the network operator by changing the stored MNC (and possibly the telephone number of the data processing centre/service) from e.g. the operator of telecommunications network 6 to the operator of the telecommunications network of base station 5.

The communication module 2 can be programmed with the required information in a plurality of ways. The communication module 2 may be pre-programmed with the information, such as the MNC and the telephone number. A data carrier, such a SIM card, may also be used to provide the mandatory MNC to the communication module 2. The SIM card may either be removed afterwards or not.

The MSC 7, shown schematically in FIG. 3, comprises means 20, 21 for communicating with the telecommunications network 6 and the further network 8. The MSC 7 comprises a processing unit 22 for performing the required operations. MSC 7 further contains a memory unit 23 and a billing module 24. MSC 7 comprises or has access to a database 25. The database 25 comprises information of the address of the appropriate data processing centre (DPC) 3A, 3B for each telephone number used in a connection request from the communication modules 2A-2D.

In an embodiment of the invention, the operation of the M2M system may be as follows.

Timer module 12 of communication module 2A of organization I instructs sensor 10 to read the values of the electricity meter of a particular household in order to establish the annual electricity bill. Timer module 12 of communication module 2B of organization I performs the same function for another electricity meter.

Incident detection module 13 of communication module 2C of organization II detects that sensor 10 registers malfunction of a printing apparatus of said organization. Incident detection module 13 of communication module 2D detects a malfunction of communication module 2D itself.

Consequently, communication modules 2A-2D have data to transmit to either data processing centre 3A of organization I or data processing centre 3B of organization II. It is assumed that both organizations I, II are customers of the operator of telecommunications network 6.

Despite the fact that other telecommunication networks may be available (e.g. for communication modules 2C and 2D the signal strength of the telecommunications network of base station 5 is larger than the signal strength of base station 4 of telecommunications network 6) all communication modules 2A-2D are forced to establish a connection with the telecommunications network 6 when they have data to report. This is achieved by programming a mandatory MNC of telecommunications network 6 in memory 14 of the communication modules 2A-2D.

Memory 14 of communication modules 2A-2D also contain a pre-provisioned phone number, e.g. "116" for module 2A, 2B and "117" for modules 2C, 2D for setting up a circuit switched connection to data application centre 3A, 3B respectively. A connection request containing these numbers is recognized in the telecommunications network 6 as a request for which authentication should be omitted. This information is e.g. known in MSC 7. The authentication steps that perform a security function and involve exchange of an authentication triplet (for GSM) or quintet (for UMTS) are omitted for the special pre-provisioned number for authentication purposes. The information may, however, still be used for data encryption. It should be noted that telecommunication network 6, as in the present embodiment, may offer multiple telephone numbers that may be used to access the telecommunications network without authentication.

Upon receipt of the connection request with the preprovisioned telephone numbers, the MSC 7 obtains the routing information for the data from database 25. For modules 2A, 2B connecting with "116", processor 22 of MSC 7 finds that the data should be routed to data processing centre 3A, whereas for modules 2C, 2D connecting with "117", it is found that data should be routed to data processing centre 3B. Using the addresses DPC3A, DPC3B, the data may subsequently be routed to the appropriate data processing centres 3A, 3B. Data processing centres 3A, 3B may now process the data obtained from the communication modules 2A, 2B and 2C, 2D, respectively, in order to establish the annual electricity bills, to service the printing apparatus and to repair the communication module 2D,

Each communication module 2A-2D also comprises an identifier, e.g. a hardware identifier such as the IMEI of the communication module, and/or an application identifier. The identifier may also transmitted to the telecommunications network 6 with the connection request. In other words, communication module 2A transmits IMEI1, communication module 2B transmits IMEI2, communication module 2C transmits IMEI3 and communication module 2D transmits IMEI4.

The identifiers IMEI1, IMEI2, IMEI3 and IMEI4 of communication modules 2A-2D, respectively, using transmitter 15 are received over the telecommunications network 6 at the receiving means 20 of MSC 7. MSC 7 is transparent for the IMEI identifiers.

The identifiers may however be used for distiguishing data of communication modules 2A-2D in the data processing centres 3A, 3B. The IMEI may also be used at the data processing centre for authentication.

Assume that organizations I and II decide to use the same telephone number "116" for accessing the telecommunications network 6. As routing of the data to the data processing centre is based on the telephone number, the data from communication modules 2A-2D now arrive at data processing centre 3A only. In order to distinguish data for communication modules 2A, 2B on the one hand and communication modules 2C, 2D on the other, the identifiers may be used in the data processing centre 3A to separate the data. It should be appreciated that distinguishing of the data may also be based on e.g. the application level identifier, a combination of the IMEI and the application level service identifier or another identifier of the communication module 2.

Of course, MSC 7 may also distinguish data on the basis of the identifier, if these identifiers are available to the MSC 7.

Organizations I, II may be billed using billing module 24 of network server 7. Billing may e.g. be performed on the basis of the number of established connections, the amount of transmitted data, the amount of communication devices etc, depending on the contract between the operator of telecommunications network 6 and the customer I, II.

Since the communication modules 2A-2D do not contain a SIM card, no data can be transmitted to the communication modules 2A-2D from the network 6. However, if communication modules 2A-2D connect to the network at known times (e.g. because the communication modules connect to network 6 in accordance with a time schedule) the connection can also be used to transfer data from the network 6 to the communication modules 2A-2D.

## Claims

1. A method of transferring data from at least a first communication module (2A, 2B) and a second communication module (2C, 2D) to, respectively, a first data processing centre (3A) and a second data processing centre (3B), via a circuit switched telecommunications network (6), comprising the steps in the telecommunications network (6) of:
- receiving a first connection request containing a first pre-provisioned telephone number from said first communication module and a second connection request containing a second pre-provisioned telephone number from said second communication module, said first and second telephone number indicating that said circuit switched telecommunications network should refrain from authenticating said first and second communication module in order to connect to said telecommunications network;
- establishing a first and a second circuit switched data connection with said first and second communication modules for receiving said data in response to said first and second connection request, respectively;
- routing said data from said first communication module (2A, 2B) to said first data processing centre (3A) and said data of said second communication module (2C, 2D) to said second data processing centre (3B) on the basis of said first and second telephone number, respectively.

2. The method according to claim 1, wherein said telecommunications network comprises a switching module, the method comprising the steps of:
- obtaining, by said switching module, an address of said first data processing centre and said second data processing centre on the basis of said first telephone number and said second telephone number, respectively;
- routing said data from said first communication module to said first data processing centre and said data of said second communication module to said second data processing centre in accordance with said address of said first data processing centre and said second data processing centre, respectively.

3. The method according to claim 1 or 2, wherein said first and second communication modules have been pre-programmed with a mandatory operator code of said telecommunications network and said first and second telephone number for use in said connection request, respectively.

4. The method according to one or more of the preceding claims, wherein said first and second connection requests are received at a pre-programmed time or due to a pre-programmed incident at said first and second communication modules.

5. The method according to one or more of the preceding claims, wherein at least one of said first and second connection requests comprises unique device identifier, such as an IMEI, of said communication module.

6. The method according to one or more of the preceding claims, wherein at least one of said first and second connection requests comprises an application code.

7. The method according to claim 5 or 6, wherein a third communication module is provided for transferring data to said first,data processing centre, said third communication module being configured for transmitting a third connection request using said first telephone number, the method comprising the step of distinguishing data from said first communication module and said third communication module on the basis of said unique identifier in said first data processing centre.

8. The method according to one or more of the claims 5-7, wherein said transfer of data is billed on the basis of at least one of said unique device identifier and an application code.

9. The method according to one or more of the preceding claims, wherein said telecommunications network has a GSM/UMTS infrastructure.

10. A method of transferring data from at least a first communication module (2A, 2B) and a second communication module (2C, 2D) to a first data processing centre (3A) via a circuit switched telecommunications network (6), comprising the steps of:
- receiving a first connection request from said first communication module containing a first unique identifier and a second connection request from said second communication module containing a second unique identifier, said first connection request and second connection request also containing a telephone number indicating that said circuit switched telecommunications network should refrain from authenticating said first and second communication module in order to connect to said telecommunications network;
- establishing a first and a second circuit switched data connection with said first and second communication modules for receiving said data in response to said first and second connection request, respectively;
- routing said data from said first communication module (2A, 2B) and said second communication module (2C, 2D) to said first data processing centre on the basis of said telephone number;
- processing said data from said first communication module (2A, 2B) in said first data processing centre (3A) in accordance with said first unique identifier;
- processing said data from said second communication module (2C, 2D) in said first data processing centre (3A) in accordance with said second unique identifier.

11. The method according to claim 10, comprising the steps of:
- obtaining an address of said first data processing centre on the basis of said telephone number;
- routing said data from said first communication module and said second communication module to said first data processing centre in accordance with said address of said first data processing centre.

12. The method according to claim 10 or 11, wherein said first unique identifier and said second unique identifier comprise at least one of a unique device identifier, such as an IMEI, and an application identifier.

13. The method according to one or more of the claims 10-12, further comprising the features of one or more of the claims 3-9.

14. A circuit switched telecommunications network (6) configured for performing the method according to one or more of the preceding claims 1, 2 and 5-13.

15. A communication module (2A, 2D) configured for operating in the telecommunications network of claim 14, said communication module being a SIM-less communication module programmed with a single mandatory operator code of said telecommunications network to transmit a connection request and being programmed to use only a single telephone number, said single telephone number indicating that said telecommunications network should refrain from authenticating said communication module in order to connect to said telecommunications network.

16. The communication module according to claim 15, wherein said module comprises at least one of a timer and an incident detector configured for triggering said communication module to transmit said connection request at a particular time indicated by said timer or in response to an incident detected by said incident detector.

17. Use of the communication module (2A, 2D) according to claim 15 or 16 in the telecommunications network (6) of claim 14 and/or in the method according to claims 1-13.

18. A switching module configured for receiving a first and second telephone number from a first (2A, 2B) and a second (2C, 2D) communication module, respectively, and for retrieving an address of a first (3A) and second (3B) data processing centre on the basis of said first and second telephone number, respectively, for routing circuit switched data from said first (2A, 2B) and second (2C, 2D) communication module to, respectively, said first (3A) and seconds (3B) data processing centre **characterised in that** the address of the first (3A) and second (3B) data processing centre are retrieved without performing an authentication of the first (2A, 2B) and second (2C, 2D) communication modules when the first and second telephone numbers are received.

## Patentansprüche

1. Verfahren zum Übertragen von Daten von mindestens einem ersten Kommunikationsmodul (2A, 2B) und einem zweiten Kommunikationsmodul (2C, 2D) an ein erstes Datenverarbeitungszentrum (3A) bzw. ein zweites Datenverarbeitungszentrum (3B) über ein leitungsvermitteltes Telekommunikationsnetz (6), umfassend die folgenden Schritte in dem Telekommunikationsnetz (6):
- Empfangen einer ersten Verbindungsanforderung, enthaltend eine erste im Voraus bereitgestellte Telefonnummer, von dem ersten Kommunikationsmodul und einer zweiten Verbindungsanforderung, enthaltend eine zweite im Voraus bereitgestellte Telefonnummer, von dem zweiten Kommunikationsmodul, wobei die erste und zweite Telefonnummer anzeigen, dass das leitungsvermittelte Telekommunikationsnetz vom Authentifizieren des ersten und zweiten Kommunikationsmoduls zum Verbinden mit dem Telekommunikationsnetz absehen sollte;
- Herstellen einer ersten und einer zweiten leitungsvermittelten Datenverbindung mit dem ersten und zweiten Kommunikationsmodul zum Empfangen der Daten als Reaktion auf die erste bzw. zweite Verbindungsanforderung;
- Leiten der Daten von dem ersten Kommunikationsmodul (2A, 2B) zu dem ersten Datenverarbeitungszentrum (3A) und der Daten von dem zweiten Kommunikationsmodul (2C, 2D) zu dem zweiten Datenverarbeitungszentrum (3B) auf der Basis der ersten bzw. zweiten Telefonnummer.

2. Verfahren nach Anspruch 1, wobei das Telekommunikationsnetz ein Vermittlungsmodul umfasst, das Verfahren die folgenden Schritte umfassend:
- Erlangen, durch das Vermittlungsmodul, einer Adresse des ersten Datenverarbeitungszentrums und zweiten Datenverarbeitungszentrums auf der Basis der ersten Telefonnummer bzw. der zweiten Telefonnummer;
- Leiten der Daten von dem ersten Kommunikationsmodul zu dem ersten Datenverarbeitungszentrum und der Daten von dem zweiten Kommunikationsmodul zu dem zweiten Datenverarbeitungszentrum in Übereinstimmung mit der Adresse des ersten Datenverarbeitungszentrums bzw. des zweiten Datenverarbeitungszentrums.

3. Verfahren nach Anspruch 1 oder 2, wobei das erste und zweite Kommunikationsmodul mit einem obligatorischen Operatorcode des Telekommunikationsnetzes und der ersten bzw. zweiten Telefonnummer zur Verwendung in der Verbindungsanforderung im Voraus programmiert wurden.

4. Verfahren nach einem oder mehreren der vorstehenden Ansprüche, wobei die erste und zweite Verbindungsanforderung zu einer im Voraus programmierten Zeit oder aufgrund eines im Voraus programmierten Ereignisses an dem ersten und zweiten Kommunikationsmodul empfangen werden.

5. Verfahren nach einem oder mehreren der vorstehenden Ansprüche, wobei mindestens eine der ersten und zweiten Verbindungsanforderung eine eindeutige Vorrichtungskennzeichnung wie eine IMEI des Kommunikationsmoduls umfasst.

6. Verfahren nach einem oder mehreren der vorstehenden Ansprüche, wobei mindestens eine der ersten und zweiten Verbindungsanforderung einen Anwendungscode umfasst.

7. Verfahren nach Anspruch 5 oder 6, wobei ein drittes Kommunikationsmodul zum Übertragen von Daten an das erste Datenverarbeitungszentrum bereitgestellt ist, wobei das dritte Kommunikationsmodul zum Übertragen einer dritten Verbindungsanforderung unter Verwendung der ersten Telefonnummer konfiguriert ist, das Verfahren umfassend den Schritt des Unterscheidens von Daten von dem ersten Kommunikationsmodul und dem dritten Kommunikationsmodul auf der Basis der eindeutigen Kennzeichnung in dem ersten Datenverarbeitungszentrum.

8. Verfahren nach einem oder mehreren der Ansprüche 5-7, wobei die Übertragung von Daten auf der Basis von mindestens einem der eindeutigen Vorrichtungskennzeichnung und eines Anwendungscodes in Rechnung gestellt wird.

9. Verfahren nach einem oder mehreren der vorstehenden Ansprüche, wobei das Telekommunikationsnetz eine GSM/UMTS-Infrastruktur aufweist.

10. Verfahren zum Übertragen von Daten von mindestens einem ersten Kommunikationsmodul (2A, 2B) und einem zweiten Kommunikationsmodul (2C, 2D) an ein erstes Datenverarbeitungszentrum (3A) über ein leitungsvermitteltes Telekommunikationsnetz (6), umfassend die folgenden Schritte:
- Empfangen einer ersten Verbindungsanforderung von dem ersten Kommunikationsmodul, enthaltend eine erste eindeutige Kennzeichnung, und einer zweiten Verbindungsanforderung von dem zweiten Kommunikationsmodul, enthaltend eine zweite eindeutige Kennzeichnung, wobei die erste Verbindungsanforderung und zweite Verbindungsanforderung ebenfalls eine Telefonnummer enthalten, die anzeigt, dass das leitungsvermittelte Telekommunikationsnetz vom Authentifizieren des ersten und zweiten Kommunikationsmoduls zum Verbinden mit dem Telekommunikationsnetz absehen sollte;
- Herstellen einer ersten und einer zweiten leitungsvermittelten Datenverbindung mit dem ersten und zweiten Kommunikationsmodul zum Empfangen der Daten als Reaktion auf die erste bzw. zweite Verbindungsanforderung;
- Leiten der Daten von dem ersten Kommunikationsmodul (2A, 2B) und dem zweiten Kommunikationsmodul (2C, 2D) zu dem ersten Datenverarbeitungszentrum auf der Basis der Telefonnummer;
- Verarbeiten der Daten von dem ersten Kommunikationsmodul (2A, 2B) in dem ersten Datenverarbeitungszentrum (3A) in Übereinstimmung mit der ersten eindeutigen Kennzeichnung;
- Verarbeiten der Daten von dem zweiten Kommunikationsmodul (2C, 2D) in dem ersten Datenverarbeitungszentrum (3A) in Übereinstimmung mit der zweiten eindeutigen Kennzeichnung.

11. Verfahren nach Anspruch 10, umfassend die folgenden Schritte:
- Erlangen einer Adresse des ersten Datenverarbeitungszentrums auf der Basis der Telefonnummer;
- Leiten der Daten von dem ersten Kommunikationsmodul und dem zweiten Kommunikationsmodul zu dem ersten Datenverarbeitungszentrum in Übereinstimmung mit der Adresse des ersten Datenverarbeitungszentrums.

12. Verfahren nach Anspruch 10 oder 11, wobei die erste eindeutige Kennzeichnung und die zweite eindeutige Kennzeichnung mindestens eines einer eindeutigen Vorrichtungskennzeichnung wie eine IMEI und einer Anwendungskennzeichnung umfasst.

13. Verfahren nach einem oder mehreren der Ansprüche 10-12, weiter umfassend die Merkmale von einem oder mehreren der Ansprüche 3-9.

14. Leitungsvermitteltes Telekommunikationsnetz (6), konfiguriert zum Ausführen des Verfahrens nach einem oder mehreren der vorstehenden Ansprüche 1, 2 und 5-13.

15. Kommunikationsmodul (2A-2D), konfiguriert zum Operieren in dem Telekommunikationsnetz nach Anspruch 14, wobei das Kommunikationsmodul ein SIM-loses Kommunikationsmodul ist, programmiert mit einem einzelnen obligatorischen Operatorcode des Telekommunikationsnetzes zum Übertragen einer Verbindungsanforderung, und programmiert, um nur eine einzelne Telefonnummer zu verwenden, wobei die einzelne Telefonnummer anzeigt, dass das Telekommunikationsnetz vom Authentifizieren des Kommunikationsmoduls zum Verbinden mit dem Telekommunikationsnetz absehen sollte.

16. Kommunikationsmodul nach Anspruch 15, wobei das Modul mindestens eines einer Zeitschaltuhr und eines Ereignisdetektors umfasst, konfiguriert zum Aktivieren des Kommunikationsmoduls zum Übertragen der Verbindungsanforderung zu einer bestimmten, von der Zeitschaltuhr angezeigten Zeit oder als Reaktion auf ein von dem Ereignisdetektor detektierten Ereignis.

17. Verwendung des Kommunikationsmoduls (2A-2D) nach Anspruch 15 oder 16 in dem Telekommunikationsnetz (6) von Anspruch 14 und/oder in dem Verfahren nach den Ansprüchen 1-13.

18. Vermittlungsmodul, konfiguriert zum Empfangen einer ersten und zweiten Telefonnummer von einem ersten (2A, 2B) bzw. einem zweiten (2C, 2D) Kommunikationsmodul und zum Abrufen einer Adresse eines ersten (3A) und zweiten (3B) Datenverarbeitungszentrums auf der Basis der ersten bzw. zweiten Telefonnummer zum Leiten von leitungsvermittelten Daten von dem ersten (2A, 2B) und zweiten (2C, 2D) Kommunikationsmodul zu dem ersten (3A) bzw. zweiten (3B) Datenverarbeitungszentrum, **dadurch gekennzeichnet, dass** die Adresse des ersten (3A) und zweiten (3B) Datenverarbeitungszentrums abgerufen werden, ohne eine Authentifizierung des ersten (2A, 2B) und zweiten (2C, 2D) Kommunikationsmoduls durchzuführen, wenn die erste und zweite Telefonnummer empfangen werden.

## Revendications

1. Procédé de transfert de données d'au moins un premier module de communication (2A, 2B) et un deuxième module de communication (2C, 2D) respectivement à un premier centre de traitement de données (3A) et à un deuxième centre de traitement de données (3B), par un réseau de télécommunication à commutation de circuits (6), comprenant les étapes, mises en oeuvre dans le réseau de télécommunication (6), consistant à :
- recevoir une première demande de connexion contenant un premier numéro de téléphone préconfiguré de la part dudit premier module de communication et une deuxième demande de connexion contenant un deuxième numéro de téléphone préconfiguré de la part dudit deuxième module de communication, lesdits premier et deuxième numéros de téléphone indiquant que ledit réseau de télécommunication à commutation de circuits doit s'abstenir d'authentifier lesdits premier et deuxième modules de communication pour établir une connexion avec ledit réseau de télécommunication ;
- établir une première et une deuxième connexion de données à commutation de circuits avec lesdits premier et deuxième modules de communication pour recevoir lesdites données en réponse respectivement à ladite première et à ladite deuxième demande de connexion ;
- acheminer lesdites données dudit premier module de communication (2A, 2B) audit premier centre de traitement de données (3A) et lesdites données dudit deuxième module de communication (2C, 2D) audit deuxième centre de traitement de données (3B) en fonction respectivement dudit premier et dudit deuxième numéro de téléphone.

2. Procédé selon la revendication 1, ledit réseau de télécommunication comprenant un module de commutation, le procédé comprenant les étapes consistant à :
- obtenir, au moyen dudit module de commutation, une adresse dudit premier centre de traitement de données et dudit deuxième centre de traitement de données en fonction respectivement dudit premier numéro de téléphone et dudit deuxième numéro de téléphone ;
- acheminer lesdites données dudit premier module de communication audit premier centre de traitement de données et lesdites données dudit deuxième module de communication audit deuxième centre de traitement de données conformément à ladite adresse respectivement dudit premier centre de traitement de données et dudit deuxième centre de traitement de données.

3. Procédé selon la revendication 1 ou 2, lesdits premier et deuxième modules de communication ayant été préprogrammés avec un code d'opérateur obligatoire dudit réseau de télécommunication et respectivement lesdits premier et deuxième numéros de téléphone en vue de leur utilisation dans ladite demande de connexion.

4. Procédé selon au moins une des revendications précédentes, lesdites première et deuxième demandes de connexion étant reçues à un instant préprogrammé ou suite à un incident préprogrammé au niveau des premier et deuxième modules de communication.

5. Procédé selon au moins une des revendications précédentes, au moins une desdites première et deuxième demandes de connexion comprenant un identifiant de dispositif unique, tel qu'un IMEI, dudit module de communication.

6. Procédé selon au moins une des revendications précédentes, au moins une desdites première et deuxième demandes de connexion comprenant un code d'application.

7. Procédé selon la revendication 5 ou 6, un troisième module de communication étant utilisé pour transférer des données audit premier centre de traitement de données, ledit troisième module de communication étant conçu pour transmettre une troisième demande de connexion en utilisant ledit premier numéro de téléphone, le procédé comprenant l'étape consistant à établir une distinction entre des données issues dudit premier module de communication et dudit troisième module de communication en fonction dudit identifiant unique dans ledit premier centre de traitement de données.

8. Procédé selon au moins une des revendications 5 à 7, ledit transfert de données étant facturé en fonction dudit identifiant de dispositif unique et/ou d'un code d'application.

9. Procédé selon au moins une des revendications précédentes, ledit réseau de télécommunication possédant une infrastructure GSM/UMTS.

10. Procédé de transfert de données d'au moins un premier module de communication (2A, 2B) et un deuxième module de communication (2C, 2D) à un premier centre de traitement de données (3A), par un réseau de télécommunication à commutation de circuits (6), comprenant les étapes consistant à :
- recevoir une première demande de connexion contenant un premier identifiant unique de la part dudit premier module de communication et une deuxième demande de connexion contenant un deuxième identifiant unique de la part dudit deuxième module de communication, ladite première demande de connexion et ladite deuxième demande de connexion contenant également un numéro de téléphone indiquant que ledit réseau de télécommunication à commutation de circuits doit s'abstenir d'authentifier lesdits premier et deuxième modules de communication pour établir une connexion avec ledit réseau de télécommunication ;
- établir une première et une deuxième connexion de données à commutation de circuits avec lesdits premier et deuxième modules de communication pour recevoir lesdites données en réponse respectivement à ladite première et à ladite deuxième demande de connexion ;
- acheminer lesdites données dudit premier module de communication (2A, 2B) et dudit deuxième module de communication (2C, 2D) audit premier centre de traitement de données en fonction dudit numéro de téléphone ;
- traiter lesdites données issues dudit premier module de communication (2A, 2B) dans ledit premier centre de traitement de données (3A) conformément audit premier identifiant unique ;
- traiter lesdites données issues dudit deuxième module de communication (2C, 2D) dans ledit premier centre de traitement de données (3A) conformément audit deuxième identifiant unique.

11. Procédé selon la revendication 10, comprenant les étapes consistant à :
- obtenir une adresse dudit premier centre de traitement de données en fonction dudit numéro de téléphone ;
- acheminer lesdites données dudit premier module de communication et dudit deuxième module de communication audit premier centre de traitement de données conformément à ladite adresse dudit premier centre de traitement de données.

12. Procédé selon la revendication 10 ou 11, ledit premier identifiant unique et ledit deuxième identifiant unique comprenant un identifiant de dispositif unique, tel qu'un IMEI, et un identifiant d'application.

13. Procédé selon au moins une des revendications 10 à 12, comprenant en outre les caractéristiques d'au moins une des revendications 3 à 9.

14. Réseau de télécommunication à commutation de circuits (6), conçu pour mettre en oeuvre le procédé selon au moins une des revendications précédentes 1, 2 et 5 à 13.

15. Module de communication (2A-2D), conçu pour fonctionner dans le réseau de télécommunication selon la revendication 14, ledit module de communication étant un module de communication sans SIM programmé avec un code d'opérateur obligatoire unique dudit réseau de télécommunication pour transmettre une demande de connexion, et étant programmé pour n'utiliser qu'un numéro de téléphone unique, ledit numéro de téléphone unique indiquant que ledit réseau de télécommunication doit s'abstenir d'authentifier ledit module de communication pour établir une connexion avec ledit réseau de télécommunication.

16. Module de communication selon la revendication 15, ledit module comprenant un compteur horaire et un détecteur d'incident conçus pour déclencher ledit module de communication pour lui faire transmettre ladite demande de connexion à un instant particulier indiqué par ledit compteur horaire ou en réponse à un incident détecté par ledit détecteur d'incident.

17. Utilisation du module de communication (2A-2D) selon la revendication 15 ou 16 dans le réseau de télécommunication (6) selon la revendication 14 et/ou dans le procédé selon les revendications 1 à 13.

18. Module de commutation, conçu pour recevoir un premier et un deuxième numéro de téléphone de la part respectivement d'un premier (2A, 2B) et d'un deuxième (2C, 2D) module de communication, et pour récupérer une adresse d'un premier (3A) et d'un deuxième (3B) centre de traitement de données en fonction respectivement dudit premier et dudit deuxième numéro de téléphone, pour acheminer des données à commutation de circuits dudit premier (2A, 2B) et dudit deuxième (2C, 2D) module de communication respectivement audit premier (3A) et audit deuxième (3B) centre de traitement de données, **caractérisé en ce que** l'adresse dudit premier (3A) et dudit deuxième (3B) centre de traitement de données est récupérée sans authentification du premier (2A, 2B) et du deuxième (2C, 2D) module de communication lors de la réception du premier et du deuxième numéro de téléphone.
